# EUROPÄISCHE PATENTSCHRIFT

(11) **EP 1 817 176 B1**
(45) Veröffentlichungstag und Bekanntmachung des Hinweises auf die Patenterteilung: **21.01.2009**
(21) Anmeldenummer: 05803478.6
(22) Anmeldetag: 10.11.2005
(51) Int. Cl.: B42D 15/10

(54) **TRÄGERMATERIAL SOWIE VERFAHREN ZUR HERSTELLUNG EINES WERTDOKUMENTES**
CARRIER MATERIAL AND METHOD FOR PRODUCING A VALUABLE DOCUMENT
MATIERE DE SUPPORT ET PROCEDE POUR PRODUIRE UN DOCUMENT DE VALEUR

(30) Priorität: 24.11.2004 DE 102004056829
(43) Veröffentlichungstag der Anmeldung: 15.08.2007
(73) Patentinhaber: Bundesdruckerei GmbH, 10958 Berlin (DE)
(72) Erfinder: PAESCHKE, Manfred, 16352 Basdorf (DE); KNEBEL, Michael, 10405 Berlin (DE)
(74) Vertreter: Maser, Jochen
(86) Internationale Anmeldenummer: PCT/EP2005/012069
(87) Internationale Veröffentlichungsnummer: WO 2006/056324

(56) Entgegenhaltungen:
- EP-A- 0 383 435
- EP-A- 0 992 939
- WO-A-98/07114
- DE-A1- 3 924 439
- DE-A1- 19 618 101
- US-A1- 2002 056 855
- US-A1- 2003 057 286

## Beschreibung

Die Erfindung betrifft ein Verfahren zur Herstellung sowie ein Trägermaterial eines Wertdokumentes, insbesondere ein buchartiges Wertdokument wie ein Passbuch.

Ein buchartiges Wertdokument, wie beispielsweise ein Reisepass oder dergleichen, besteht aus einem Buchblock und einer Passkarte, die miteinander verbunden werden, bevor diese mit einem Bucheinband zu einem Passbuch verbunden werden. Der Buchblock ist aus Papier oder papierähnlichem Material hergestellt, das Sicherheitsmerkmale umfasst. Die Passkarte weist eine Vielzahl von Sicherheitselementen auf, und im Falle eines Reisepasses wird der Buchblock passend zur Passkarte personalisiert.

Es besteht ein erhebliches Interesse daran, buchartige Wertdokumente vor Fälschungen zu schützen und die Herstellung von Fälschungen technisch unmöglich oder zumindest unrentabel zu machen. Darüber hinaus soll eine leichte Überprüfbarkeit und Kontrollierbarkeit von Zwischenprodukten für buchartige Wertdokumente oder für Wertdokumente selbst ermöglicht sein.

Zukünftige buchartige Wertdokumente werden mit maschinenlesbaren biometrischen Merkmalen ausgerüstet. Es wird hierfür das bereits in Reisepässen vorhandene Bild des Dokumenteninhabers in digitaler Form in einem Speicher möglichst fälschungssicher abgelegt. Diese Daten können kontaktlos ein- und ausgelesen werden. Hierfür ist beispielsweise eine Übertragungswellenlänge von 13,56 MHz gemäß ISO 14443 A und B vorgesehen. Die Speicherelemente für die Speicherung von biometrischen Merkmalen weisen derzeit bis zu 72 kB EEPROM-Speichervolumen auf. Die Größe des Speichers ist grundsätzlich durch die Lesegeschwindigkeit und die Verifikationszeit begrenzt und spielt insbesondere bei kryptographischen Hardware- und/oder Softwarelösungen eine Rolle.

Die derzeit verfügbaren RFID-Module weisen üblicherweise eine Gesamtdicke von 300 bis 400 µm auf. Darüber hinaus ist eine große flächige Ausdehnung der Speicherelemente gegeben. Dadurch weisen die Wertdokumente eine größere Gesamtdicke auf. Darüber hinaus sind die eingesetzten Module anfällig im Hinblick auf die Biegebeanspruchung.

Aus der EP 0 383 435 A1 ist eine Wertmarke bekannt, welche eine Vielzahl von elektronischen Bauteilen umfasst, die auf einem flexiblen Substrat vorgesehen sind. Oberhalb und unterhalb eines jeden elektronischen Bauteils ist eine Folie vorgesehen, die eine erhöhte Zugfestigkeit aufweist. Diese einzelnen eingebundenen Komponenten sind wiederum durch eine obere und untere Schicht aus Polycarbonat oder Polyester geschützt, wobei zwischen den beiden Laminatschichten eine Einbettmasse vorgesehen ist, die ausgehärtet wird. Dadurch weisen solche Wertmarken eine hohe Dicke auf. Darüber hinaus ist die Herstellung durch eine Vielzahl von Verfahrensschritten sehr aufwändig.

Aus der US 2002/0056855 A1 geht eine Trägeranordnung hervor, bei der ein Halbleiterchip in einem Substrat zwischen zwei Pads fixiert ist. Diese Pads sind über eine Klebeverbindung mit einem Chip verbunden und schützen den Chip vor Bruch. Somit ist eine hochaufbauende Anordnung gegeben, die im Aufbau aufwändig ist.

Die WO 98/07114 A offenbart einen Datenträger zur Übertragung von elektronischen Signalen, bei denen ein Chip zwischen zwei Pappe- oder Papierlagen vorgesehen ist, wobei der Chip durch Versteifungselemente seitlich umgeben ist. Diese Versteifungselement stellen Windungen der Induktionsspule dar und sind als separate Einlegeteile ausgebildet, die den Chip umgeben. Dadurch wird der Halbleiterchip lediglich in den seitlichen Randbereichen geschützt. Im Übrigen ist ein konventioneller Schichtaufbau gegeben.

Aus der DE 39 24 439 A1 geht ein Trägerelement mit wenigstens einem integrierten Schaltkreis zum Einbau in Chipkarten hervor. Der Halbleiterchip ist von einem Versteifungsring umgeben, dessen Biegesteifigkeit größer ist als die Biegesteifigkeit herkömmlicher Chipkarten. Dadurch ist erhöhter Aufbau der Gesamtdicke sowie ein aufwändiger Aufbau gegeben.

Der Erfindung liegt die Aufgabe zugrunde, ein Verfahren zur Herstellung sowie ein Trägermaterial eines buchartigen Wertdokumentes vorzuschlagen, so dass die mit Speicherelementen versehenen Wertdokumente eine geringere Gesamtdicke sowie eine hohe Lebensdauer aufweisen.

Die der Erfindung zugrunde liegende Aufgabe wird durch ein Verfahren gelöst, bei dem das erfindungsgemäße Trägermaterial mit zumindest einem ungehausten IC-Element auf einem durch Kompression des Trägermaterials hergestellten und versteiften Aufnahmebereich bestückt wird und das Trägermaterial mit zumindest einer Laminatschicht zur Bildung einer Laminatschichtumhüllung versehen wird. Derartige Wertdokumente, wie beispielsweise ein Personalausweis oder ein Sicherheitsinlett für einen Reisepass, werden in der Gesamtdicke erheblich reduziert. Gleichzeitig sind die Anforderungen an eine hohe Lebensdauer erfüllt. Durch die Laminatschichtumhüllung kann ein zusätzlicher Schutz gegen Beschädigungen und Belastungen gegeben sein.

Nach einer alternativen Ausgestaltung eines Verfahrens zur Herstellung eines Wertdokumentes ist vorgesehen, dass das Trägermaterial mit zumindest einem Aufnahmebereich von zumindest einer Laminatschicht zur Bildung einer Laminatschichtumhüllung umgeben wird und das ungehauste IC-Element nach Einbringen einer Kavität in die gebildete Laminatschichtumhüllung zum Aufnahmebereich positioniert wird. Dadurch können die vorgenannten Vorteile erzielt werden. Zudem weist diese nachträgliche Implantierung des IC-Elementes in die bereits fertiggestellte Personalisierseite den Vorteil auf, dass ein geprüftes IC-Element mit einer geprüften Personalisierseite oder einem geprüften Wertdokument, wie beispielsweise einem Reisepass, vereint wird. Dadurch wird ein möglicher Ausschuss gering gehalten, was bei den beträchtlichen Kosten der IC-Elemente von Vorteil ist.

Nach dem Implantieren des zumindest einen IC-Elementes wird bevorzugt eine Vergussmasse aufgebracht und das IC-Element eingegossen. Dadurch wird die Haftung optimiert, und es ist ein hinreichender Schutz des IC-Elementes gegen äußere Einflüsse gegeben.

Vorteilhafterweise ist vorgesehen, dass die Vergussmasse eine höhere Steifigkeit als die Laminatschicht aufweist. Dadurch kann eine alleinige oder zusätzliche Aussteifung zum Aufnahmebereicht erfolgen.

Des Weiteren ist vorteilhafterweise vorgesehen, dass diese Vergussmasse reaktiv und/oder teilreaktiv und/oder mittels elektromagnetischer Strahlung oder Wärme ausgehärtet wird. Dadurch kann unmittelbar beim Einbringen der Vergussmasse der Aufnahmebereich versteift werden und gleichzeitig ein beidseitiger Schutz des IC-Elementes gegeben sein.

Bevorzugt ist vorgesehen, dass die Vergussmasse mittels einem diffraktiven Element zusätzlich geprägt wird. Das diffraktive Element ist beispielsweise überlappend zur Kavität gewählt und kann als Transferelement oder mit einer dünnen Schutzfolie ausgebildet sein.

Die Kontaktierung des ungehausten IC-Elementes erfolgt vorteilhafterweise mittels einer Flip-Chip-Kontaktierung direkt auf Spulenanschlussflächen. Diese Kontaktierung bietet eine hohe Prozesssicherheit bei einer automatischen Bestückung.

Bevorzugt ist vorgesehen, dass die ungehausten IC-Elemente als gedünnte IC-Elemente eingesetzt werden. Dadurch kann eine Reduzierung der Dicke der ungehausten IC-Elemente von typischerweise 185 µm auf unter 100 µm erzielt werden. Die gedünnten IC-Elemente können bis zu etwa 40 µm Dicke gedünnt werden.

Zur Reduzierung der Größe der IC-Elemente, die üblicherweise im Bereich von 10 mm² liegen, ist vorgesehen, dass zwei oder mehrere gedünnte und/oder nicht gedünnte IC-Elemente auf das Trägermaterial aufgebracht werden. Dadurch kann jedes der aufgebrachten IC-Elemente in der Fläche reduziert sein, wodurch das Trägermaterial oder eine Personalisierseite höheren Biege-Wechsel-Belastungen standhält. Jedes dieser IC-Elemente ist einem versteiften Aufnahmebereich zugeordnet. Diese IC-Elemente können durch Kontakte oder auch kontaktlos miteinander kommunizieren.

Nach einer alternativen Ausgestaltung ist vorgesehen, dass mehrlagige IC-Elemente eingesetzt werden. Derartige mehrlagige IC-Elemente werden auch als sogenannte Multilayer-IC-Elemente bezeichnet. Deren äußeren Abmessungen werden wiederum kleiner. Gleichzeitig weisen diese Multilayerelemente den Vorteil auf, dass diese weniger bruchgefährdet aufgrund deren übereinanderliegenden Schichten sind. Diese können auch mit weiteren einzelnen IC-Elementen und umgekehrt auf einem Trägermaterial kombiniert werden.

Das Trägermaterial wird nach einer bevorzugten Ausführungsform des Verfahrens mit einer Spule versehen, die mittels leitfähiger polymerer Paste direkt auf das Trägermaterial drucktechnisch appliziert wird. Insbesondere wird diese Spule auf eine Rückseite der Personalisierseite aufgebracht. Diese polymere leitfähige Paste ist bevorzugt auf der Basis einer Silberpaste und/oder einer weitgehend transparenten elektrisch leitfähigen Paste aufgebaut.

Nach dem Aufbringen der leitfähigen polymeren Paste zur Herstellung der Spule erfolgt bevorzugt eine Flächenpressung von zumindest 20 N/cm², insbesondere jedoch 300 bis 500 N/cm². Dadurch wird die elektrische Leitfähigkeit erhöht, vorzugsweise zumindest um den Faktor 2. Der Laminierdruck wird bevorzugt in einer Warmpresse einer Transferlaminierpresse oder einer Kaltpresse aufgebracht, wobei die Kaltpresse höhere Drücke ermöglicht. Alternativ können anstelle von gedruckten Spulen auch geätzte Spulen aus metallischen Stoffen verwendet werden. Zusätzlich können auch metallische Stoffe aufgedruckt oder aufgepresst werden.

Nach einer weiteren vorteilhaften Ausgestaltung der Verfahren ist vorgesehen, dass ein Spulenende mit einem Anschluss einer Brücke verbunden und die Brücke mit einer Isolation gegen die Spulenverbindungen isoliert wird. Bevorzugt werden die Brückenisolation und die Brücke drucktechnisch hergestellt, so dass eine schnelle und kostengünstige Herstellung ermöglicht ist.

Die zur Durchführung der Verfahren verwendeten ungehausten IC-Elemente weisen bevorzugt Anschlussstellen auf, die im Abstand größer als 0,5 mm sind, um eine sichere Kontaktierung zu ermöglichen. Bevorzugt weisen diese Anschlusskontaktstellen zumindest eine Oberfläche aus Nickel und/oder Gold auf oder sind aus diesen Materialien hergestellt, wodurch eine Kontaktierung mit einer hohen Leitfähigkeit erzielt wird.

Die Anschlussstellen des zumindest einen IC-Elementes werden zum Kontaktieren vorteilhafterweise mittels einer elektrisch leitfähigen polymeren Paste versehen und mit thermischer Energie und/oder Strahlungsenergie und/oder Mikrowellenenergie ausgehärtet. Hierfür werden bevorzugt Dispensergeräte eingesetzt, um die Flächen auszuhärten.

Alternativ ist vorgesehen, dass das zumindest eine IC-Element auf Anschlussflächen mittels Ultraschall kontaktiert wird, wobei vorteilhafterweise die Anschlussflächen des IC-Elementes mit den Spulenanschlussflächen eine intermetallische Verbindung eingehen. Hierfür wird mit einem Dispenser ein dünnflüssiger Haftkleber aufgetragen, um das IC-Element mit Ultraschall und einem gewissen Anpressdruck und bevorzugt einer relativ geringen Wärme von unter 100 °C aufzusetzen. Die Anschlussstellen der Spule und die des IC-Elementes sind aufeinander angepasst, so dass eine geeignete Verbindung ermöglicht ist. Eine Kombination der Spulen auf der Basis eines Silberpastendruckes und die Anschlussflächen des IC-Elementes mit zumindest einer Nickel-Gold-Oberfläche erfüllen diese Anforderungen. Bevorzugt sind die IC-Anschlussflächen um einige Mikrometer hervorstehend über dem Niveau des IC-Elementes vorgesehen.

Sowohl bei der Flip-Chip-Kontaktierung als auch bei der direkten Kontaktierung mittels Ultraschall können die mechanischen Spannungen durch unterschiedliche thermische Ausdehnungskoeffizienten und die Biegewechsellast für die mechanische und elektrische Stabilität berücksichtigt werden.

Nach einer vorteilhaften Ausgestaltung des Verfahrens ist vorgesehen, dass vor dem Einsetzen des zumindest einen IC-Elementes durch selektive Druckausübung im Bereich des einzusetzenden IC-Elementes ein Untergrund mit Anschlussflächen komprimiert wird. Dadurch wird die Leitfähigkeit der aufgedruckten Spulen erhöht.

Des Weiteren ist vorteilhafterweise vorgesehen, dass in dem Bereich des zumindest einen IC-Elementes vor dem Anbringen der Spule die Anschlussflächen durch selektives Schleifen oder Laserablation oder örtlicher Kompression gedünnt werden. Dadurch kann ein geringer Schichtdickenaufbau sichergestellt werden.

Diese Aufgabe wird durch ein Trägermaterial gemäß den Merkmalen des Anspruchs 14 gelöst.

Das erfindungsgemäße Trägermaterial weist einen durch eine Kompression des Trägermaterials versteiften Aufnahmebereich für zumindest ein ungehaustes IC-Element. Dadurch wird ermöglicht, dass das ungehauste IC-Element gemeinsam mit dem Aufnahmebereich des Trägermaterials ein IC-Modul bildet, so dass das ungehauste IC-Element nach dem Auf- oder Einbringen gegen Bruch geschützt ist. Dadurch kann eine erhebliche Verringerung des Gesamtaufbaus erzielt werden, da das sogenannte Gehäuse des IC-Elementes durch einen Aufnahmebereich des Trägermaterials gebildet ist. Das Trägermaterial weist zur Aufnahme des zumindest einen ungehausten IC-Elementes einen versteiften Aufnahmebereich auf, der durch eine Kompression des Trägermaterials hergestellt ist. Diese Ausbildung des versteiften Aufnahmebereiches kann bevorzugt bei papier-oder faserartigen Trägermaterialien, jedoch nicht ausschließlich bei diesen Trägermaterialien, zum Einsatz kommen.

Nach einer vorteilhaften Ausgestaltung der Erfindung ist vorgesehen, dass der Aufnahmebereich zumindest abschnittsweise aus einem Folienmaterial ausgebildet ist. Dadurch kann das Folienmaterial an spezielle Anforderungen angepasst werden. Beispielsweise kann der Aufnahmebereich mit einer geringen Dicke und einer höheren Steifigkeit ausgebildet sein, als die angrenzenden Bereiche des Trägermaterials. Der Aufnahmebereich und/oder das Trägermaterial kann alternativ auch vollständig aus Folienmaterial ausgebildet werden.

Das Folienmaterial ist vorteilhafterweise aus erhärtbarem Kunststoff, Metall und/oder einem Verbundmaterial ausgebildet. Das Folienmaterial ist als relativ dünnes Material ausgebildet und kann im Falle einer Kunststoffbahn beispielsweise aus einem härtbaren Kunststoff bestehen. Durch eine elektromagnetische Strahlung, wie beispielsweise Laserbestrahlung, Mikrowellenbestrahlung, UV-Bestrahlung oder Wärme, kann der Aufnahmebereich zumindest abschnittsweise versteift oder ausgehärtet werden. Die Verbundmaterialien können sowohl aus Metall und/oder Kunststoff oder weiteren Naturstoffen zusammengesetzt sein.

Der Aufnahmebereich kann vorteilhafterweise durch eine netz-, gitter-oder streifenförmige Einlage versteift sein. Diese Einlagen können während der Herstellung des Trägermaterials eingebracht sein oder nach Herstellung des Trägermaterials auf das Trägermaterial aufgebracht und/oder eingepresst werden. Ebenso kann das Trägermaterial auf die Einlage aufgebracht oder eingepresst sein.

Bevorzugt ist die Einlage aus Natur-, Synthese- und/oder Glasfasern hergestellt. Die Fasern sind vorzugsweise miteinander verflochten, verwoben, verklebt oder verschweißt. Die Fasern oder die Faserstruktur ist in zumindest zwei Erstreckungsrichtungen vorzugsweise minimiert ausgebildet, um eine Versteifungswirkung zu erzielen. Alternativ kann auch vorgesehen sein, dass die Einlage durch Besprühen oder Bedampfen, Bedrucken einzelner Faserelemente erfolgt. Ebenso kann während der Herstellung des Trägermaterials ein Beimischen von Fasern, auch metallischen Fasern, gegeben sein, die während der Herstellung durch Einwirkung von elektromagnetischen Feldern ausgerichtet werden, um eine Versteifung auszubilden.

Die Einlage und/oder der Aufnahmebereich für das IC-Element wird vorzugsweise mit einer Versteifungskomponente versehen. Diese Versteifungskomponente ist bevorzugt flüssig oder gelförmig und wird auf die Einlage und/oder den Aufnahmebereich aufgebracht. Dabei kann ein Aushärten der Versteifungskomponente unter Einschluss der Einlage erfolgen, wodurch ein versteifter Aufnahmebereich ausgebildet ist. Die Versteifungskomponente kann mit der Einlage reagieren und in Verbindung gehen oder auch nur unter Einschluss erhärten.

Bevorzugt ist vorgesehen, dass die Versteifungskomponente aus einem Harz, einem Lack, einem aushärtbaren Kunststoff, einer Keramikmischung oder dergleichen besteht. Bei dem aushärtbaren Kunststoff kann es sich um ein Mehrkomponentenkunststoff handeln, der unter Zugabe von Härtern reagiert und aushärtet. Ebenso kann eine Aushärtung durch UV-Laserbehandlung oder dergleichen erfolgen, so dass beispielsweise keramische Massen erhärten. Des Weiteren kann das Auf- und/oder Einbringen von Sintermaterialien vorgesehen sein, die unter Aufbringen von Druck und/oder Wärme in einem Verfahrensschritt aushärten.

Die Versteifungskomponente kann bevorzugt Hafteigenschaften umfassen, so dass gleichzeitig neben dem Aussteifen des Aufnahmebereiches eine haftende Verbindung zwischen dem ungehausten IC-Element und dem Trägermaterial entsteht.

Nach einer weiteren vorteilhaften Ausgestaltung der Erfindung ist vorgesehen, dass der Aufnahmebereich aus einem chemisch dotierten Gebilde besteht. Durch Hinzufügung von weiteren Substanzen und/oder elektromagnetischer Strahlung erfolgt ein Aussteifungsprozess.

Unter einem chemisch dotierten Gebilde wird ein trägerartiges flächiges Gebilde verstanden, dessen Steifigkeit im Aufnahmebereich mittels gezielter örtlicher Behandlung erhöht werden kann. Unter gezielter örtlicher Behandlung ist beispielsweise eine Strahlungsbeaufschlagung mit geeigneter Wellenlängencharakteristik und geeigneter Dosierung zu verstehen und/oder das örtlich gezielte Hinzufügen chemischer Substanzen, die direkt oder indirekt zu einer erhöhten Steifigkeit im Aufnahmebereich führen. Der Aufnahmebereich kann dabei örtlich sehr eng begrenzt werden. Er kann jedoch insbesondere hinsichtlich der Steifigkeit verlaufend ausgeführt werden. Die Erhöhung der örtlichen Steifigkeit kann dabei beispielsweise durch Aufbringen eines entsprechend hohen Druckes bei einer entsprechenden Temperatur über eine entsprechende Zeit erfolgen und dabei muss der Aufheiz- und Abkühlprozess beachtet werden.

In einer weiteren Ausführungsform kann die örtliche Steifigkeit durch Beaufschlagung mit einer entsprechenden Bestrahlung und/oder einer chemischen Dotierung in Form eines örtlich begrenzten und/oder verlaufenden Druckgebildes und/oder Transferelementes und der anschließenden Kompression erfolgen. Es wird daher unter einem chemisch dotierten Gebilde sehr allgemein ein Substrat verstanden, das derart ausgebildet beziehungsweise chemisch dotiert ist und das örtlich begrenzt im Aufnahmebereich durch physikalische und/oder chemische Verfahren mit einer höheren Steifigkeit ausgebildet werden kann.

Der Aufnahmebereich des Trägermaterials entspricht flächenmäßig vorteilhafterweise der Auflagefläche des IC-Elementes. Somit erfolgt eine vollflächige Auflage des gesamten IC-Elementes auf einem versteiften Bereich. Der Aufnahmebereich übernimmt die Funktion eines Gehäuses von einem IC-Element. Dadurch wird das Trägermaterial Teil eines Chip-Moduls.

Nach einer vorteilhaften Weiterbildung der Auflagefläche ist vorgesehen, dass der versteifte Aufnahmebereich einen Randbereich umfasst, der sich geringfügig über die äußere Abmessung des IC-Elementes erstreckt. Dadurch kann ein Toleranzfeld gebildet werden, um die Bestückung des Trägermaterials mit einem IC-Element zu erleichtern und dieses sicher aufzunehmen.

Nach einer weiteren alternativen Ausgestaltung des Aufnahmebereiches ist vorgesehen, dass entlang des Randbereiches des IC-Elementes eine streifenförmige Aussteifung vorgesehen ist. Diese streifenförmige Umrandung des IC-Elementes erstreckt sich geringfügig innerhalb und außerhalb der äußeren auf dem Trägermaterial aufliegenden Körperkanten. Dadurch kann eine Mindestauflagefläche geschaffen sein, die zum Schutz des IC-Elementes dient. Beispielsweise kann diese äußere Umrandung durch weitere dazwischenliegende Verrippungen ausgesteift werden.

Nach einer weiteren vorteilhaften Ausgestaltung der Erfindung ist vorgesehen, dass sich ein Übergangsbereich an dem versteiften Aufnahmebereich anschließt. Dadurch kann ein flexibler und weicher Übergang zwischen dem üblicherweise, aber nicht notwendigerweise, aus einer Papiermasse bestehenden Trägermaterial und dem versteiften Aufnahmebereich gegeben sein, wodurch eine Bruchgefahr vermindert und eine Biegewechselbeanspruchung erhöht ist. Der Übergangsbereich kann bereichsweise durch streifenförmige Einlagen gebildet sein, die eine unterschiedliche Auslauflänge aufweisen. Ebenso kann das Folienmaterial beispielsweise weiter verdünnt werden, wodurch die Steifigkeit abnimmt. Weitere Kombinationen aus den vorgenannten Möglichkeiten sind beliebig möglich und einsetzbar.

Vorteilhafterweise ist vorgesehen, dass der Aufnahmebereich das IC-Element zumindest teilweise umgibt oder das IC-Element zumindest teilweise eingebettet ist. Dadurch kann die Schutzfunktion für das IC-Element erhöht sein. Beispielsweise ist ermöglicht, dass der Aufnahmebereich im noch nicht versteiften Zustand das IC-Element aufnimmt und/oder zumindest teilweise eingebettet wird und im Anschluss daran der Aufnahmebereich ausgehärtet wird. Somit erfolgt eine maßgenaue Anpassung des Aufnahmebereiches an die Größe des IC-Elementes, so dass eine kompakte Anordnung geschaffen wird. Die nachträgliche Aussteifung des Aufnahmebereiches kann vor oder nach dem Einbringen des Trägermaterials in eine Laminatschichtumhüllung erfolgen.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht eines erfindungs- gemäßen Wertdokumentes im aufgeklappten Zu- stand,
- Figur 2: eine schematische Draufsicht auf ein Sicherheitsin- lett mit einer Transpondereinheit in einer Laminat- schichtumhüllung,
- Figur 3: eine schematische Draufsicht auf eine Rückseite des Sicherheitsinletts,
- Figur 4: eine schematisch vergrößerte Draufsicht auf einen Ausschnitt "X" gemäß Figur 3,
- Figur 5: eine schematische Schnittdarstellung entlang der Li- nie V-V in Figur 4,
- Figur 6: eine schematische Schnittdarstellung entlang der Li- nie VI-VI in Figur 4,
- Figur 7: eine schematische Schnittdarstellung entlang der Li- nie VI-VI in Figur 4 bei einem implantierten IC- Element,
- Figur 8a: eine schematische Seitenansicht eines erfindungs- gemäßen Trägermaterials,
- Figur 8b: eine schematische Seitenansicht eines alternativen erfindungsgemäßen Trägermaterials,
- Figur 9: eine Draufsicht auf einen Ausschnitt eines Trägerma- terials mit einem alternativen Aufnahmebereich,
- Figur 10: eine schematische Teilansicht in der Draufsicht auf einen alternativen Aufnahmebereich und
- Figur 11: eine schematische Teilansicht in der Draufsicht eines weiteren alternativen Aufnahmebereichs.

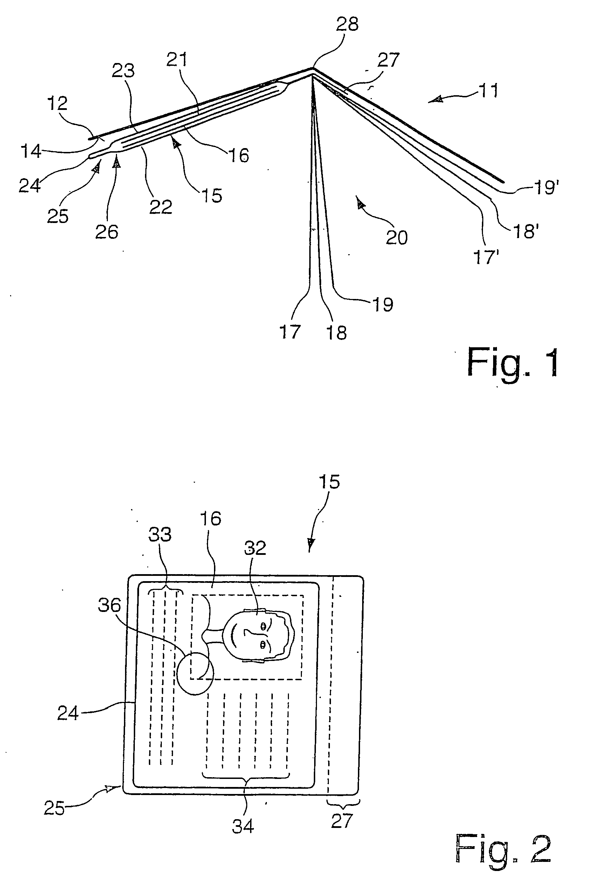

In Figur 1 wird ein Wertdokument 11 schematisch in aufgeklappter Ansicht gezeigt. Bei diesem Wertdokument 11 handelt es sich bevorzugt um ein Reisedokument oder um ein Passbuch. Das Wertdokument 11 umfasst einen Bucheinband 12, wie beispielsweise ein Buckdeckel eines Buches auf der Außenseite als verstärkendes Element. Auf der Innenseite ist ein Vorsatz 14 vorgesehen. Dieser Vorsatz 14 umgibt den Bucheinband, der einen Buchdeckel umschließt. Das Wertdokument 11 umfasst zumindest ein Sicherheitsinlett 15 in Form von zumindest einer Personalisierseite 16. Vorteilhafterweise ist zumindest ein weiteres Sicherheitsinlett als Innenseiten 17, 18, 19 vorgesehen. Diese Innenseiten 17, 18 und 19 sind beispielsweise als Doppelseite 17', 18' und 19' ausgebildet und werden beim Herstellen des Wertdokumentes 11 im Falzbereich mit der Personalisierseite 16 zu einem Buchblock 20 miteinander vernäht. Das Sicherheitsinlett 15 weist auf einer Rückseite eine Transpondereinheit 21 auf, wobei das Sicherheitsinlett 15 und die Transpondereinheit 21 jeweils mit einer oberen und einer unteren Laminatschicht 22, 23 umgeben sind. Diese Laminatschichten 22, 23 umschließen das Sicherheitsinlett 15 und die Transpondereinheit 21 vollständig und weisen vorteilhafterweise einen umlaufenden und geschlossenen Rand 24 auf, wie dies beispielsweise in Figur 2 näher dargestellt ist. Die Laminierschichten 22, 23 bilden eine Tasche oder eine Umhüllung 25, um einen Verbund, der zumindest aus einem Sicherheitsinlett 15, das aus mehreren Schichten bestehen kann und zumindest einer Transpondereinheit 21 umfasst, zu umhüllen. An einer Seite der Laminatschichtumhüllung 25 ist ein Überstand 27 ausgebildet, der beispielsweise 10 bis 13 mm beträgt. Dieser Überstand 27 trägt wesentlich zur Stabilität und Befestigung einer Naht 28 bei, durch die auch die in den Seiten 17, 18 und 19 zu einem Buchblock zusammen mit der Laminatschichtumhüllung 25 fixiert werden. Alternativ kann auch vorgesehen sein, dass das Sicherheitsinlett 15 und die Transpondereinheit 21 in einer Schicht integriert sind oder durch Kombination von mehreren Schichten und/oder Teilschichten aufgebaut und gebildet werden.

Alternativ ist auch möglich, dass das Sicherheitsinlett 15 ein Wertdokument bildet, wie dies beispielsweise beim Personalausweis der Fall ist.

In Figur 2 ist schematisch eine Draufsicht auf eine Personalisierseite 16 dargestellt. Die Personalisiervorderseite kann beispielsweise gemäß ICAO-Standard ausgebildet sein und umfasst ein Foto 32 des Dokumenteninhabers, eine OCR maschinenlesbare ICAO-Zeile 33, Personalisierdaten 34 und vollflächig oder wie im Ausführungsbeispiel elementweise eine diffraktive Struktur 36, die oberflächig oder innenliegend aufgeführt sein kann, sowie eine Reihe weiterer nicht gezeichneter Sicherheitsmerkmale oder -elemente. Schematisch ist die Kontur der Personalisierseite dargestellt, die bevorzugt aus einem Trägermaterial 41, insbesondere einem Sicherheitspapier, hergestellt ist und gegebenenfalls weitere Sicherheitsmerkmale aufweist.

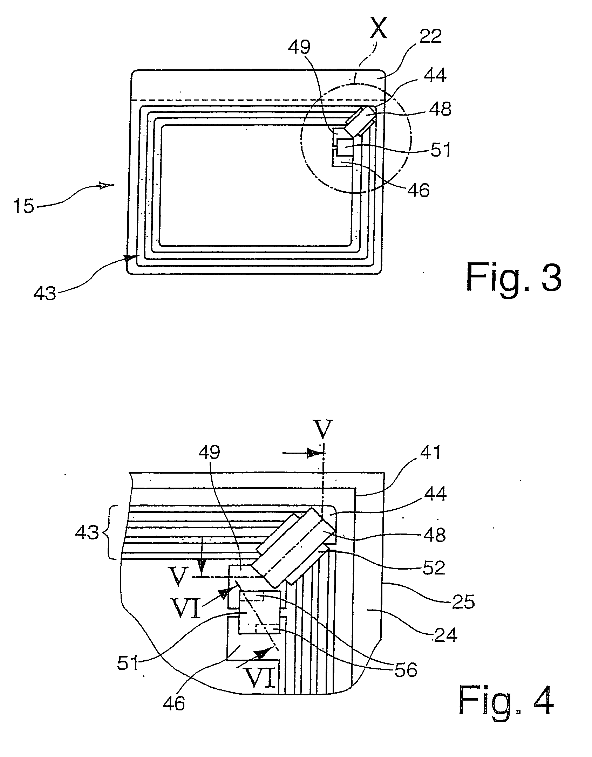

In Figur 3 ist eine Draufsicht auf eine Rückseite der Personalisierseite 16 dargestellt, die Teil des Sicherheitsinletts 15 ist. Auf der Rückseite ist beispielsweise eine Spule 43 mittels Siebdruck und polymeren leitfähigen Pasten aufgedruckt. Die Spule 43 weist beispielsweise drei bis fünf Windungen auf, wodurch Widerstandswerte im Bereich zwischen 20 und 30 Ohm erreicht werden. Eine kontaktlose Kommunikation ist dadurch ermöglicht. Der Verlauf der einzelnen Windungen ist wahlweise möglich und wird entsprechend der gewünschten Funktionalität und der ästhetischen Anmutung gewählt. Bei transparenten bis silbrig gewählten leitfähigen Pasten kann dies von untergeordneter Bedeutung sein. Die Spule 43 wird nach Trocknung der Pasten zusätzlich komprimiert, um die elektrische Leitfähigkeit zu erhöhen. Die Spule 43 weist zwei Anschlussflächen 44, 46 auf. Eine außerhalb der Windung liegende Anschlussfläche 44 wird über eine Brücke 48 mit einer innenliegenden Anschlussfläche 49 verbunden, um ein IC-Element 51 auf den innenliegenden Anschlussflächen 46 und 49 zu positionieren. Diese Anschlussflächen 44, 46 und 49 sowie die Anordnung der Brücke 48 und des IC-Elementes 51 sind beispielhaft in Figur 4 vergrößert dargestellt.

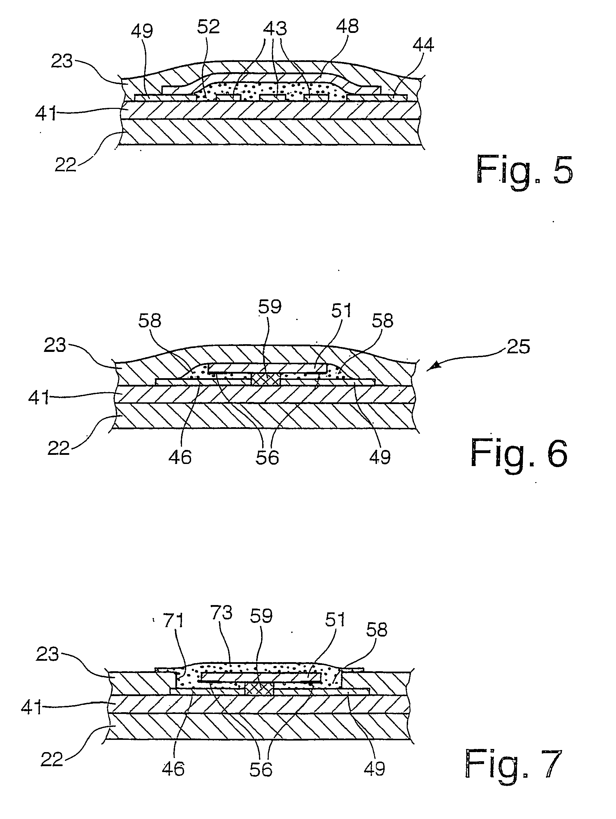

In Figur 5 ist eine schematische Schnittdarstellung entlang der Linie V-V gemäß Figur 4 dargestellt. Diese Schnittdarstellung zeigt die Anordnung der Brücke 48, um die Anschlussfläche 44 von außen nach innen zu verlegen und eine Kontaktierung mit der Anschlussfläche 49 zu bilden. Eine Kontaktierung der Anschlussflächen 44, 49 mit der Brücke 48 kann mittels polymerer elektrisch isotrop leitfähiger Kleber oder mittels Krimpen oder mittels einer intermetallischen Verbindung erfolgen. Im Ausführungsbeispiel ist die Brücke 48 drucktechnisch durch den Druck einer Brückenisolation 52 und dem anschließenden Druck der Brücke 48 hergestellt. Alternativ kann auch eine dünne Folie 52 mit einer leitfähigen Brückenfolie verwendet werden.

Das Trägermaterial 41 kann im Bereich der Spulen 43 sowie der Brücke 48 und/oder der Anschlussflächen 44, 46 und 49 in der Dicke verringert sein, so dass eine konstante Gesamtdicke des Sicherheitsinletts 15 erzielt wird.

In Figur 6 ist eine schematische Schnittdarstellung entlang der Linie VI-VI in Figur 4 dargestellt. Auf einem Trägermaterial 41 ist ein IC-Element 51 aufgebracht, das durch die Laminatschichtumhüllung 25 einlaminiert ist. Das IC-Element 51 wird bevorzugt durch eine Flip-Chip-Kontaktierung auf den Anschlussflächen 46, 49 kontaktiert. Anschlussstellen 56 des IC-Elementes 51 werden mit einer Kontaktiersubstanz 58 mit den Anschlussflächen 46, 49 dauerelastisch und elektrisch leitfähig verbunden. Diese Kontaktiersubstanz 58 kann bei großflächigeren IC-Elementen 51 eine isotrope elektrisch leitfähige Substanz sein. Die zusätzliche Anbringung eines Haftvermittlers 59 ist oftmals hilfreich und kann zusätzlich zur Aussteifung des Bereiches der IC-Elemente 51 und dem Schutz der IC-Elemente 51 dienen.

Nach dem Kontaktieren des IC-Elementes 51 zu den Anschlussflächen 46 und 49 wird das mit dem zumindest einen IC-Element 51 bestückten Trägermaterial 41 einer Laminiereinheit zugeführt und durch Aufbringen einer oberen und unteren Laminatschicht 22, 23 eine Laminatschichtumhüllung 25 gebildet. Nach dem Aufbringen des IC-Elementes 51 auf den Anschlussflächen 46 und 49 sowie der Herstellung der Brücke 48 ist die Transpondereinheit 51 fertiggestellt.

In Figur 7 ist eine alternative Ausführungsform zu Figur 6 dargestellt. Diese Ausführungsform zeigt ein implantiertes IC-Element 51. Das Trägermaterial 51 wird mit einer Spule 43 und den Anschlussflächen 44, 46 und 49 sowie der Brücke 48 versehen und durch eine Laminatschichtumhüllung 25 geschlossen. Im Anschluss daran wird eine Kavität 71 beispielsweise mittels eines Fräsers oder einem Laserstrahl hergestellt. Die Freilegung der Anschlussflächen 46, 49 kann bei Verwendung eines Fräsers mittels Widerstandsmessung erfolgen. Die mechanische Befestigung und Kontaktierung des IC-Elementes 51 kann in Analogie zu den vorbeschriebenen Verfahren erfolgen. Das Einbringen eines Haftvermittlers 59 kann vor und/oder nach der elektrischen Kontaktierung des IC-Elementes 51 zu den Anschlussflächen 46 und 49 eingebracht werden. Eine Vergussmasse 73 wird mittels Dispenser aufgetragen. Zur Trocknung beziehungsweise Härtung kann eine elektromagnetische Strahlung verwendet werden. Die Vergussmasse 78 kann bevorzugt aus einem dauerelastischen Thermoplast oder einem reaktiven bis teilreaktiven Harz beziehungsweise Harzgemisch bis zu einem duroplastisch aushärtenden Harz ausgewählt werden. Durch die Wahl der Härte im ausgehärteten Zustand kann die Belastung des IC-Elementes 51 beziehungsweise der Anschlussflächen 46, 49, 56, 57 optimiert werden. Zusätzlich kann über die Vergussmasse 73 eine diffraktive Struktur 36 gelegt werden, die vorzugsweise überlappend mit der angrenzenden Laminatschicht 23 aufgebracht und/oder zusätzlich geprägt wird. Somit kann dieses diffraktive Element als Transferelement ausgebildet sein und einen zusätzlichen Schutz bilden.

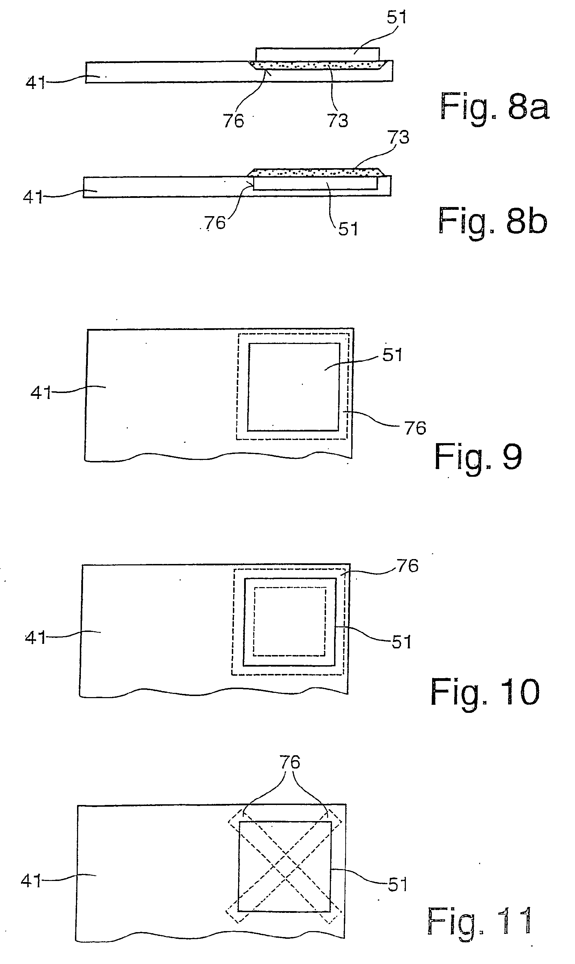

In den nachfolgenden Figuren 8 bis 11 sind weitere alternative Ausführungsformen zur Ausgestaltung von Aufnahmebereichen 76 dargestellt. Die IC-Elemente 51 werden in Analogie zu den zuvor beschriebenen Verfahren zur Montage und Anordnung zum Trägermaterial 41 eingesetzt.

In den Figuren 8a und 8b sind schematisch vergrößert die Seitenansichten des Trägermaterials 41 mit einem darauf angeordneten IC-Element 51 gemäß den zuvor beschriebenen Figuren vorgesehen. Zur Verringerung der Gesamtdicke des Sicherheitsinletts 15 ist vorgesehen, dass ein ungehaustes IC-Element 51 auf das Trägermaterial 41 aufgebracht oder zumindest teilweise eingebracht wird. Zur Verringerung der Bruchgefahr und Erhöhung von Biege-Wechsel-Lasten ist vorgesehen, dass das ungehauste IC-Element 51 einem Aufnahmebereich 76 des Trägermaterials 41 zugeordnet ist. Dieser Aufnahmebereich 76 weist zumindest gegenüber den weiteren Bereichen oder daran angrenzenden Bereichen des Trägermaterials 41 eine erhöhte Steifigkeit auf, um zusammen mit dem ungehausten IC-Element 51 ein Chipmodul zu bilden. Durch das Einbringen eines versteiften Aufnahmebereiches 76 in das Trägermaterial 41 gemäß Figur 8a kann somit das Gehäuse des ungehausten IC-Elementes 51 eingespart werden, wodurch eine Reduzierung der Gesamtschichtdicke gegeben ist. Bevorzugt wird gemäß der in Figur 8b ebenfalls erfindungsgemäßen Ausführungsform das IC-Element 51 in einem Aufnahmebereich 76 des Trägermaterials 41 eingebracht. Das Trägermaterial 41 kann zur Herstellung des Aufnahmebereiches 76 eingepresst werden. Dadurch kann in einfacher Weise in einem Arbeitsschritt der Aufnahmebereich 76 ausgebildet sein. Insbesondere beim Einsatz von papier-und/oder faserartigern Material können vor der Montage des IC-Elementes 51 oder auch bei der Herstellung des Trägermaterials 41 der oder die Aufnahmebereiche 76 eingepresst werden. Diese Aufnahmebereiche 76 können auch zur Aufnahme weiterer Komponenten ausgebildet sein, wie zum Beispiel zur Aufnahme einer Spule 43 oder dergleichen.

Gemäß dem Ausführungsbeispiel kann bei der Verwendung eines ungehausten IC-Elementes 51 eine Gesamtschichtdicke von unter 300 µm, insbesondere von unter 200 µm erzielt werden, die eine obere und eine untere Laminatschicht 22, 23 sowie die Dicke des Trägermaterials 41 umfasst. Diese Schichtdicke kann bei der Verwendung von gedünnten IC-Elementen 51 noch weiter reduziert werden, da die Schichtdicken der IC-Elemente 51 von üblicherweise 185 µm bis auf etwa 20 bis 40 µm gedünnt sein können und derart eine Gesamtschichtdicke von kleiner 120 µm erzielt werden kann.

Das Trägermaterial 41, beispielsweise für Sicherheitsdokumente, besteht üblicherweise aus einer Papiermasse. Der Aufnahmebereich 76 kann durch eine Versteifung der Papiermasse ausgebildet sein. Beispielsweise kann eine Versteifungskomponente aufgebracht oder der Aufnahmebereich 76 mit dieser Versteifungskomponente getränkt werden, um die Gehäusefunktion zu schaffen. Die Versteifungskomponente kann in Form von einem aushärtbaren Kunststoff, einer mit der Papiermasse reaktiven Flüssigkeit, einem Klebemittel oder dergleichen bestehen. Des Weiteren kann alternativ vorgesehen sein, dass durch äußere Einwirkung von elektromagnetischer Strahlung die Papiermasse aussteift, da in der Papiermasse Materialkomponenten integriert sind, die bei Einwirkung elektromagnetischer Strahlung ihren Zustand ändern und versteifen. Weiterhin kann vorgesehen sein, dass das Trägermaterial durch eine Kompression oder ein Verdichten von einer oder mehrerer Lagen oder Abschnitten von Lagen des Materials versteift wird.

Alternativ zur vorbeschriebenen Ausgestaltung, bei der das aus einer Papiermasse bestehende Trägermaterial 41 durch zusätzliche Komponenten im Aufnahmebereich 76 versteift werden, kann vorgesehen sein, dass zumindest der Aufnahmebereich 76 durch integriertes Folienmaterial und/oder einer Einlage ausgebildet ist, um einen versteiften Aufnahmebereich 76 zu bilden. Das Folienmaterial kann während der Herstellung der Papiermasse an vorbestimmten Stellen integriert sein. Ebenso ist ermöglicht, dass das Folienmaterial aufgebracht und/oder aufgepresst wird und/oder auf einer oder beiden Seiten mit Papiermasse versehen ist. Das Folienmaterial besteht aus einem dünnen Bähnmaterial, beispielsweise aus Metall, Keramik, Kunststoff oder einem Verbundmaterial. Alternativ kann anstelle des Folienmaterials auch eine Einlage aus netz-, gitter- oder streifenförmigen Strukturen gegeben sein. Beispielsweise können bidirektional gleichwirkende Gitterstrukturen aus Fasern eingelegt werden, die bei Hinzufügung einer Versteifungskomponente einen versteiften Aufnahmebereich 76 ausbilden. Diese Einlagen können gegebenenfalls während der Herstellung des Trägermaterials 41 integriert werden oder anschließend aufgepresst oder eingepresst werden.

Das Trägermaterial 41 kann auch vollständig aus Materialien vorgesehen sein, die zur Bildung des versteiften Aufnahmebereiches 76 eingesetzt werden. Beispielsweise kann beim Einsatz von einer dünnen Kunststofffolie die Ober- und Unterseite bedruckt oder mit Laser beschriftet werden, wohingegen der Aufnahmebereich 76 durch elektromagnetische Bestrahlung derart behandelt wird, dass ein harter und versteifter Aufnahmebereich 76 gegeben ist.

Die Versteifung des Aufnahmebereichs erstreckt sich bevorzugt über die gesamte Dicke des Trägermaterials 41, wobei dies nicht zwingend erforderlich ist. Im ersten Ausführungsbeispiel gemäß Figur 8 erstreckt sich der Aufnahmebereich 76 über die auf das Trägermaterial 41 projizierte Fläche des IC-Elementes 51.

In Figur 9 ist beispielsweise vorgesehen, dass der Aufnahmebereich 76 einen Randbereich 77 umfasst, der das IC-Element 51 zumindest abschnittsweise, vorteilhafterweise vollständig, umgibt. Dadurch ergibt sich auch die Möglichkeit, dass der Randbereich 77 bei Aufbringen einer Vergussmasse eine zusätzliche Fixierung und seitliche Aussteifung erhält, wodurch der Schutz des IC-Elementes 51 erhöht wird.

In Figur 10 ist eine alternative Ausführungsform des Aufnahmebereiches 76 dargestellt. Beispielsweise kann der Aufnahmebereich 76 in Form eines Rahmens (strichliniert dargestellt) ausgebildet sein, auf dem das IC-Element 51 aufliegt.

In Figur 11 ist nur beispielhaft eine weitere alternative Ausgestaltung eines Aufnahmebereiches 76 dargestellt. Diese durch zwei gekreuzte streifenförmige Bereiche gebildete Ausführungsform kann ebenfalls zur Aussteifung genügen. Weitere geometrische Ausgestaltungsmöglichkeiten und Konturen zur Bildung des Aufnahmebereiches 76 sind denkbar.

Der versteifte Aufnahmebereich 76 weist zumindest eine Biegesteifigkeit auf, die zumindest geringfügig oberhalb der Bruchfestigkeit des IC-Elementes 51 liegt. Dadurch wird die Funktionssicherheit über die geforderte Lebensdauer gewährleistet.

Die Aufnahmebereiche 76 werden in Abhängigkeit der zu bestückenden IC-Elemente 51 ausgewählt und auf dem Trägermaterial 41 vorgesehen. Bei aneinandergrenzenden Aufnahmebereichen 76 ist bevorzugt vorgesehen, dass ein elastischer Übergangsbereich geschaffen wird, um eine großflächige Aussteifung zu vermeiden und die Aussteifung im Wesentlichen auf die Fläche zu begrenzen, die durch das IC-Element 51 auf das Trägermaterial 41 beim Positionieren projiziert wird. Beim Einsatz von beispielsweise gitter-, streifen-, netzförmigen Strukturen kann der Übergangsbereich zwischen zwei benachbarten Aufnahmebereichen 76 dadurch geschaffen werden, dass im Übergangsbereich keine Versteifungskomponente oder härtbare Masse aufgebracht oder eingebracht wird oder eine Einwirkung erfolgt, um diesen Übergangsbereich zu versteifen. Somit kann dieser Übergangsbereich stabiler gegenüber den weiteren Bereichen des Trägermaterials 41, jedoch flexibler als die Aufnahmebereiche 76, ausgebildet sein. Dadurch kann die Biege-Wechsel-Last erhöht und somit die Lebensdauer verlängert werden.

Die vorstehend beschriebenen Merkmale sind jeweils für sich erfindungswesentlich und können beliebig miteinander kombinierbar sein.

## Patentansprüche

1. Verfahren zur Herstellung eines Wertdokumentes (11) mit einem Sicherheitsinlett (15), das ein Trägermaterial (41) umfasst, **dadurch gekennzeichnet, dass** ein ungehaustes IC-Element (51) auf einem durch eine Kompression des Trägermaterials (41) hergestellten und verstelften Aufnahmebereich (76) des Trägermaterials (41) aufgebracht wird und dass das Trägermaterial (41) mit zumindest einer Laminatschicht (22, 23) zur Bildung einer Laminatschichtumhüllung (25) versehen wird.

2. Verfahren zur Herstellung eines Wertdokumentes mit einem Sicherheitsinlett (15), das ein Trägermaterial (41) umfasst, **dadurch gekennzeichnet, dass** das Trägermaterial (41) mit zumindest einer Laminatschicht (22, 23) zur Bildung einer Laminatschichtumhüllung (25) versehen wird und dass zumindest ein ungehaustes IC-Element (51) nach Einbringen einer Kavität (71) in die Laminatschichtumhüllung (25) zum zumindest teilweise versteiften Aufnahmebereich (76) positioniert wird.

3. Verfahren nach Anspruch 2, **dadurch gekennzeichnet, dass** das implantierte IC-Element (51) mit einer Vergussmasse (73) vergossen wird.

4. Verfahren nach Anspruch 3, **dadurch gekennzeichnet, dass** die Vergussmasse (73) eine höhere Steifigkeit als die Laminatschicht (22, 23) aufweist und reaktiv und/oder teilreaktiv und/oder mittels elektromagnetischer Strahlung oder Wärme ausgehärtet wird.

5. Verfahren nach einem der Ansprüche 2 bis 4, **dadurch gekennzeichnet, dass** zumindest ein implantiertes IC-Element (51) mit einer diffraktiven Struktur (36) abgedeckt wird.

6. Verfahren nach Anspruch 1 oder 2, **dadurch gekennzeichnet, dass** zumindest ein gedünntes IC-Element (51) eingesetzt wird.

7. Verfahren nach einem der Ansprüche 1 oder 2, **dadurch gekennzeichnet, dass** zumindest ein Multilayer-IC-Element eingesetzt wird.

8. Verfahren nach Anspruch 1 oder 2, **dadurch gekennzeichnet, dass** eine Spule (43) mittels leitfähiger polymerer Paste, die insbesondere auf Basis einer opaken Silberpaste und/oder einer weitgehend transparenten elektrisch leitfähigen Paste besteht, auf das Trägermaterial (41) drucktechnisch appliziert wird.

9. Verfahren nach Anspruch 1 oder 2, **dadurch gekennzeichnet, dass** eine Anschlussfläche (44) der Spule (43) und eine weitere Anschlussfläche (49) mit einer Brücke (48) verbunden und die Brücke (48) mit einer Brückenisolation (42) gegen Spulenwindungen isoliert wird.

10. Verfahren nach Anspruch 9, **dadurch gekennzeichnet, dass** die Brückenisolation (52) und die Brücke (48) drucktechnisch hergestellt werden.

11. Verfahren nach Anspruch 1 oder 2, **dadurch gekennzeichnet, dass** das zumindest eine IC-Element (51) auf Anschlussflächen (46, 49) mittels einer elektrisch leitfähigen polymeren Paste kontaktiert und diese Paste mittels elektromagnetischer Strahlung oder Wärme ausgehärtet wird.

12. Verfahren nach Anspruch 1 oder 2, **dadurch gekennzeichnet, dass** das zumindest eine IC-Element (51) auf Anschlussflächen (46, 49) mittels Ultraschall kontaktiert wird.

13. Verfahren nach einem der Ansprüche 1 oder 2, **dadurch gekennzeichnet, dass** im Bereich des zumindest einen IC-Elementes (51) vor der Anbringung der Spule (43) das Trägermaterial (41) durch selektives Schleifen oder Laserablation oder örtlicher Kompression gedünnt wird.

14. Trägermaterial zur Herstellung eines buchartigen Wertdokumentes (11) nach einem Verfahren gemäss eine der Vorhergehende Ansprüche 1 bis 13, das zur Aufnahme von wenigstens einem Speicherelement vorgesehen ist, **dadurch gekennzeichnet, dass** ein durch eine Kompression des Trägermaterials versteifter Aufnahmebereich (76) für zumindest ein ungehaustes IC-Element (51) vorgesehen ist.

15. Trägermaterial nach Anspruch 14, **dadurch gekennzeichnet, dass** der Aufnahmebereich (76) zumindest abschnittsweise aus einem Folienmaterial ausgebildet ist.

16. Trägermaterial nach einem der Ansprüche 4 oder 15, **dadurch gekennzeichnet, dass** der Aufnahmebereich (76) durch eine netz-, gitter- oder streifenförmige Einlage versteift ist.

17. Trägermaterial nach Anspruch 16, **dadurch gekennzeichnet, dass** die Einlage Natur-, Synthese- und/oder Glasfasern umfasst.

18. Trägermaterial nach einem der Ansprüche 14 bis 17, **dadurch gekennzeichnet, dass** der Aufnahmebereich (76) aus einem chemisch dotieren Gebilde besteht.

19. Trägermaterial nach einem der Ansprüche 14 bis 18, **dadurch gekennzeichnet, dass** der Aufnahmebereich (76) einer Auflagefläche des IC-Elementes (51) entspricht.

20. Trägermaterial nach einem der Ansprüche 14 bis 19, **dadurch gekennzeichnet, dass** sich ein Übergangsbereich an dem versteiften Aufnahmebereich (76) anschließt, der eine kontinuierliche oder diskontinuierliche Reduzierung der Steifigkeit zum angrenzenden Trägermaterial aufweist.

21. Trägermaterial nach einem der Ansprüche 14 bis 20, **dadurch gekennzeichnet, dass** der Aufnahmebereich (76) das IC-Element (51) zumindest teilweise umgibt oder das IC-Element (76) zumindest teilweise eingebettet ist.

22. Verwendung des Trägermaterials nach einem der Ansprüche 14, bis 21 zur Herstellung eines Personalausweises, eines buchartigen Wertdokumentes oder eines Reisepasses.

## Claims

1. Method for producing a valuable document (11) having a security inlay (15) comprising a carrier material (41), **characterized in that** an unpackaged IC element (51) is applied on a receiving region (76) of the carrier material (41), said receiving region being produced and stiffened by a compression of the carrier material (41), and **in that** the carrier material (41) is provided with at least one laminate layer (22, 23) for forming a laminate layer encapsulation (25).

2. Method for producing a valuable document having a security inlay (15) comprising a carrier material (41) **characterized in that** the carrier material (41) is provided with at least one laminate layer (22, 23) for forming a laminate layer encapsulation (25), and **in that** at least one unpackaged IC element (51) is positioned after the introduction of a cavity (71) into the laminate layer encapsulation (25) with respect to the at least partly stiffened receiving region (76).

3. Method according to Claim 2, **characterized in that** the implanted IC element (51) is potted with a potting compound (73).

4. Method according to Claim 3, **characterized in that** the potting compound (73) has a higher stiffness than the laminate layer (22, 23) and is cured reactively and/or partly reactively and/or by means of electromagnetic radiation or heat.

5. Method according to any of Claims 2 to 4, **characterized in that** at least one implanted IC element (51) is covered with a diffractive structure (36).

6. Method according to Claim 1 or 2, **characterized in that** at least one thinned IC element (51) is used.

7. Method according to either of Claims 1 and 2, **characterized in that** at least one multilayer IC element is used.

8. Method according to Claim 1 or 2, **characterized in that** a coil (43) is applied to the carrier material (41) by printing technology by means of a conductive polymeric paste composed in particular on the basis of an opaque silver paste and/or a substantially transparent electrically conductive paste.

9. Method according to Claim 1 or 2, **characterized in that** one connection area (44) of the coil (43) and a further connection area (49) are connected to a bridge (48) and the bridge (48) is insulated from coil turns by a bridge insulation (42).

10. Method according to Claim 9, **characterized in that** the bridge insulation (52) and the bridge (48) are produced by printing technology.

11. Method according to Claim 1 or 2, **characterized in that** the at least one IC element (51) is contact-connected on connection areas (46, 49) by means of an electrically conductive polymeric paste and said paste is cured by means of electromagnetic radiation or heat.

12. Method according to Claim 1 or 2, **characterized in that** the at least one IC element (51) is contact-connected on connection areas (46, 49) by means of ultrasound.

13. Method according to either of Claims 1 and 2, **characterized in that** in the region of the at least one IC element (51) before the fitting of the coil (43), the carrier material (41) is thinned by selective grinding or laser ablation or local compression.

14. Carrier material for producing a book-like valuable document (11) according to the method according to one of the preceding Claims 1 to 13, which is provided for receiving at least one memory element, **characterized in that** a receiving region (76) stiffened by compression of the carrier material is provided for at least one unpackaged IC element (51).

15. Carrier material according to Claim 14, **characterized in that** the receiving region (76) is formed from a film material at least in sections.

16. Carrier material according to either of Claims 14 or 15, **characterized in that** the receiving region (76) is stiffened by a net-, grid- or strip-shaped insert.

17. Carrier material according to Claim 16, **characterized in that** the insert comprises natural, synthetic and/or glass fibres.

18. Carrier material according to any of Claims 14 to 17, **characterized in that** the receiving region (76) is composed of a chemically doped structure.

19. Carrier material according to any of Claims 14 to 18, **characterized in that** the receiving region (76) corresponds to a bearing area of the IC element (51).

20. Carrier material according to any of Claims 14 to 19, **characterized in that** a transition region is adjacent to the stiffened receiving region (76), which has a continuous or discontinuous reduction of the stiffness with respect to the adjoining carrier material.

21. Carrier material according to any of Claims 14 to 20, **characterized in that** the receiving region (76) at least partly surrounds the IC element (51) or the IC element (76) is at least partly embedded.

22. Use of the carrier material according to any of Claims 14 to 21 for producing an identity card, a book-like valuable document or a passport.

## Revendications

1. Procédé de fabrication d'un document de valeur (11) qui présente une garniture de protection (15) qui comprend un matériau de support (41), **caractérisé en ce que**
un élément de circuit intégré IC (51) dépourvu de logement est appliqué sur une partie de reprise (76) du matériau de support (41) préparée par compression du matériau de support (41) et rigidifiée et
**en ce que** le du matériau de support (41) est doté d'au moins une couche stratifiée (22, 23) pour former une enveloppe (25) en couche stratifiée.

2. Procédé de fabrication d'un document de valeur (11) qui présente une garniture de protection (15) qui comprend un matériau de support (41), **caractérisé en ce que**
le matériau de support (41) est doté d'au moins une couche stratifiée (22, 23) pour former une enveloppe (25) en couche stratifiée et
**en ce qu'**après avoir ménagé une cavité (71) dans l'enveloppe (25) en couche stratifiée, on place dans la partie de reprise (76) rigidifiée au moins partiellement au moins un élément de circuit intégré IC (51) dépourvu de logement.

3. Procédé selon la revendication 2, **caractérisé en ce que** l'élément IC (51) implanté est englobé dans une pâte de scellement (73).

4. Procédé selon la revendication 3, **caractérisé en ce que** la rigidité de la pâte de scellement (73) est supérieure à celle de couche stratifiée (22, 23) et est durcie par réaction et/ou par réaction partielle, par un rayonnement électromagnétique ou thermiquement.

5. Procédé selon l'une des revendications 2 à 4, **caractérisé en ce qu'**au moins un élément IC (51) implanté est recouvert par une structure diffractive (36).

6. Procédé selon les revendications 1 ou 2, **caractérisé en ce qu'**il recourt à au moins un élément IC (51) aminci.

7. Procédé selon les revendications 1 ou 2, **caractérisé en ce qu'**il recourt à au moins un élément IC multicouches.

8. Procédé selon les revendications 1 ou 2, **caractérisé en ce qu'**une bobine (43) est appliquée par impression sur le matériau de support (41) au moyen d'une pâte polymère conductrice constituée en particulier d'une pâte opaque à l'argent et/ou d'une pâte électriquement conductrice et largement transparente.

9. Procédé selon les revendications 1 ou 2, **caractérisé en ce qu'**une surface (44) de raccordement de la bobine (43) et une autre surface de raccordement (49) sont raccordées à un pont (48) et **en ce que** le pont (48) est isolé des enroulements de la bobine par une isolation (42) de pont.

10. Procédé selon la revendication 9, **caractérisé en ce que** l'isolation (52) de pont et le pont (48) sont réalisés par impression.

11. Procédé selon les revendications 1 ou 2, **caractérisé en ce qu'**au moins un élément IC (51) est mis en contact avec les surfaces de raccordement (46, 49) au moyen d'une pâte polymère électriquement conductrice, cette pâte étant durcie à l'aide d'un rayonnement électromagnétique ou thermiquement.

12. Procédé selon les revendications 1 ou 2, **caractérisé en ce qu'**au moins un élément IC (51) est mis en contact avec les surfaces de raccordement (46, 49) au moyen d'ultrasons.

13. Procédé selon les revendications 1 ou 2, **caractérisé en ce qu'**avant le placement de la bobine (43), le matériau de support (41) est aminci par meulage sélectif, ablation au laser ou compression locale dans la zone occupée par le ou les éléments IC (51).

14. Matériau de support destiné à la fabrication d'un document de valeur (11) en forme de livret par un procédé selon l'une des revendications 1 à 13 qui précèdent et prévu pour reprendre au moins un élément de mémoire, **caractérisé en ce qu'**il présente une partie de reprise (76) d'au moins un élément IC (51) dépourvu de logement, laquelle partie de reprise est rigidifiée par compression du matériau de support.

15. Matériau de support selon la revendication 14, **caractérisé en ce qu'**au moins une portion de la partie de reprise (76) est formée d'un matériau en feuille.

16. Matériau de support selon l'une des revendications 14 ou 15, **caractérisé en ce que** la partie de reprise (76) est rigidifiée par une garniture en treillis, en grille ou en ruban.

17. Matériau de support selon la revendication 16, **caractérisé en ce** la garniture comprend des fibres naturelles, synthétiques ou de verre.

18. Matériau de support selon l'une des revendications 14 à 17, **caractérisé en ce que** la partie de reprise (76) est constituée d'un produit dopé chimiquement.

19. Matériau de support selon l'une des revendication 14 à 18**, caractérisé en ce que** la partie de reprise (76) correspond à la surface de pose de l'élément IC (51).

20. Matériau de support selon l'une des revendications 14 à 19, **caractérisé en ce qu'**une partie de transition se raccorde à la partie de reprise (76) rigidifiée et présente une réduction progressive ou discontinue de la rigidité en direction du matériau de support adjacent.

21. Matériau de support selon l'une des revendication 14 à 20, **caractérisé en ce que** la partie de reprise (76) entoure au moins une portion de l'élément IC (51) ou englobe au moins une portion de l'élément IC (51).

22. Utilisation du matériau de support selon l'une des revendications 14 à 21 pour la fabrication d'un document d'identité personnelle, d'un document de valeur en forme de livret ou d'un passeport.
